# EUROPEAN PATENT APPLICATION

(11) **EP 0 707 956 A1**
(43) Date of publication of application: **24.04.1996**
(21) Application number: 94870159.4
(22) Date of filing: 13.10.1994
(51) Int. Cl.: B32B 27/32

(54) **Multilayer materials for making packages**

(71) Applicant: THE PROCTER & GAMBLE COMPANY, Cincinnati, Ohio 45202 (US); BASF AKTIENGESELLSCHAFT, D-67056 Ludwigshafen (DE); Kobusch Folien GmbH, D-34414 Warburg (DE)
(72) Inventor: Moss, Gates Markham, Cincinnati, Ohio 45242 (US); Tschabunin, Helmut, D-71691 Freiburg (DE); Kaczun, Jürgen, D-71229 Leonberg (DE); Honert, Josef, D-34414 Warburg (DE)
(74) Representative: Engisch, Gautier

(57) **Abstract**

The present invention is a multilayer material for making packages suitable for containing dry or liquid odoriferous products such as detergent compositions. Said multilayer material comprises at least a layer of polyolefine-based material, less than 25% by weight of post consumer recycled plastic and a perfume barrier layer comprising a lacquer. Said multilayer material allows to prevent migration of odoriferous compounds like perfume through the walls of a package made of said material while being at the same time well accepted by the consumer from an environmental point of view, i.e. said multilayer material is recyclable.

## Description

### Technical field

The present invention relates to a multi-layered plastic material having good odor barrier properties and which is suitable to make packages, of the type produced by welding and severing sheets or tubes of plastic material at spaced locations. The multilayer material of the present invention is particularly suitable for making stand-up refill pouches for odoriferous compositions such as laundry and household cleaning compositions.

### Background of the invention

Many and various forms of stand-up plastic containers used as packages for receiving dry, powdered or granular commodities or even flowable products or liquids have been extensively described in the art as well as materials used for making same.

Many of said plastic materials are in the form of multilayer materials comprising different types of materials in order that a variety of demands on properties of such laminates in many fields are met. For example, in the field of detergent packages there are severe demands upon the properties of laminates including for example moisture impermeability, gas impermeability, ultraviolet rays-intercepting property, water-proof property, mechanical strengths, cost, flexibility and the like. It is actually very difficult to satisfy such requirements by using a single material.

For example, European patent application number 93870067.1. discloses the use of multi-layer laminations of plastic/paper material or laminates/coextrudates of any plastic material well known in the art such as high and low density polyethylene (HDPE, LDPE). Other materials can be chosen and added to laminates/coextrudates of high and low density polyethylene as a function of the protection needed for the contained product. In particular, for dry odoriferous compositions such as detergent compositions, the package can be made of a multilayer material comprising polyethylene terephtalate (PET) sandwiched between laminates/coextrudates of high and low density polyethylene.

Such a package made of multilayer materials comprising a layer of polyethylene terephtalate possess good barrier properties, e.g. the perfume release through the walls of such a package is minimum. However, laminates comprising polyethylene (PE) and polyethylene terephtalate (PET) are not fully desirable as they are not recyclable after use, as compared to similar laminates without polyethylene terephtalate. Furthermore, such multilayer materials when used to manufacture packages have the drawback that they present quality issues due to the presence of polyethylene terephtalate. Indeed, there is a danger of braking associated with packages made of such laminates comprising polyethylene (PE) and polyethylene terephtalate (PET) when they withstand high pressures and/or violent shocks, e.g. when the consumer lets such a package fall on the floor. This is because polyethylene terephtalate possesses low ductility at room temperature and does not absorb the impact of a shock. Another drawback associated with such multilayer materials is that they are expensive due to the presence of polyethylene terephtalate.

It is thus an object of the present invention to provide a packaging material that uses materials offering odor barrier characteristics while conferring greater environmental advantages to said packaging material. It is a further object of the present invention to provide such a packaging material at lower cost.

It is another object of the present invention to provide a multilayer material, which allow to make packages for dry or liquid odoriferous compositions, such as laundry or household cleaning compositions comprising perfume, said multilayer material preventing perfume release through said packages.

It is another object of the present invention to provide packages which withstand high pressures and violent shocks without danger of braking.

It is yet another independent object of the present invention to provide a process allowing for the manufacture of a multilayer material offering good odor barrier characteristics.

These objects are met by providing a multilayer material comprising at least a polyolefine-based material and a perfume barrier layer. Said perfume barrier layer comprises a lacquer.

An advantage associated with the multilayer material of the present invention is that said lacquer contained therein is compatible with printing. Indeed said lacquer can be applied on conventional printing presses like flexographic or gravure, sandwiched between other layers or as a frontal printing.

### Summary of the invention

The present invention provides a multilayer material and packages made of a material comprising said multilayer material and a method of making said multilayer material in a manner to satisfy the aforementioned needs.

The present invention encompasses a multilayer material comprising at least a layer of polyolefine-based material and a perfume barrier layer, said polyolefine-based material comprises less than 25% by weight of the total multilayer material of post consumer recycled plastic and said perfume barrier layer comprises a lacquer forming mixture.

The present invention also encompasses a package, such as a stand-up refill pouch, made of a material comprising the multilayer material according to the present invention. Such a package being particularly suitable for containing an odoriferous composition, such as fabric and/or household treatment compositions.

### Detailed description of the invention

In order to make the invention more readily understood, reference will now be made to the accompanying drawings, in which;
Figure 1 schemically illustrates the transverse structure of the preferred embodiment of the multilayer material according to the present invention: the perfume barrier layer is sandwiched between two layers of polyolefine-based material.
Figure 2 schemically illustrates the transverse structure of an embodiment of the multilayer material according to the present invention: a layer of polyolefine-based material and the perfume barrier layer.
Figure 3 is a perspective view of a refill pouch in accordance with the present invention made of said multilayer material.

The multilayer material of the present invention comprises at least a layer of polyolefine-based material and a perfume barrier layer, said polyolefine-based material comprising less than 25% by weight of the total multilayer material of post consumer recycled plastic (PCR).

As an essential feature the multilayer material of the present invention comprises a layer of polyolefine-based material. By "polyolefine-based material" it is to be understood herein that all different types of polyolefines well known in the art including the polyolefine copolymers having olefinic monomers such as ethylene, propylene, butene, and the like, are suitable. Preferred herein are polyethylenes such as low density polyethylene (LDPE), linear low density polyethylene (LLDPE), high density polyethylene (HDPE) and the like. Such polyethylenes are known to those skilled in the art, for example, LLDPE is commercially available from Dow under the trade name Dowlex®.

Said layer of polyolefine-based material is either a blended or/and a laminated or/and a coextruded film. Preferred herein are the blended or laminated/coextruded films comprising a low density polyethylene, a linear low density polyethylene, a high density polyethylene, or mixtures thereof. Said films may have different thicknesses and densities depending on their use. It is preferred herein to use polyolefine resin films with the highest possible specific density, to minimize stretching of the films and thereby also avoid that cracks appear in the lacquer. Said films of the present invention so formed must have a minimum surface tension of 40 dyn/cm, preferably of 42 dyn/cm. Indeed, different techniques may be used in order to improve the bond strengths of said films including physical surface treatments, e.g. sand blasting, or chemical surface treatments, e.g. corona discharging and/or application of a primer.

As another essential element the multilayer material of the present invention comprises a perfume barrier layer. Said perfume barrier layer comprises a lacquer forming mixture, said perfume barrier layer having a thickness of from 1 to 20 micrometers, preferably of from 1.5 to 5 micrometers and most preferably of from 2 to 3 micrometers.

The perfume barrier layer according to the present invention comprises preferably a two-component polyurethane system based on polyesterpolyols and polyisocyanates (crosslinker) in combination with cellulose derivatives and/or polyvinylalcohol derivatives as the lacquer forming mixture. Nitrocellulose is an example of suitable cellulose derivatives to be used according to the present invention. Polyvinylbutyral is an example of suitable polyvinylalcohol derivatives to be used according to the present invention.

The lacquer forming mixture can additionally contain up to 5% by weight, based on the total amount of the lacquer forming mixture, of plasticizers such as dialkyl phthalates (with alkyl ≧ C4) and/or up to 5% by weight of a commercially available slip aid and/or up to 10% by weight of a commercially available keton resin, for example one based on acetophenone/formaldehyde. Examples of lacquer forming components suitable for the use of the present invention are Flexoplastol ® 2KB-Lacquer 9A 918 920 or Flexoplastol ® 2KB-Lacquer 9A 919 817 commercially available from BASF Lacke + Farben AG, Stuttgart.

Suitable examples of crosslinkers in the lacquer forming mixture are oligomeric polyisocyanates having average molecular weights of between 1200 and 2000, preferably based on hexamethylendiisocyanate (HDI), toluylenediisocyanate (TDI) and/or 4,4'-diphenylmethandiisocyanate (MDI), for example Crosslinker 9A 919 612 or Crosslinker 9A 910 226, both commercially available from BASF Lacke + Farben AG, Stuttgart, which crosslinkers are 60% solutions in ethylacetate.

The lacquer forming mixture is usually dissolved in an inert organic solvent, preferably in an ester, such as ethylacetate. The lacquer forming mixture can for example contain the polyesterpolyol together with the cellulose derivatives and/or the polyvinylalcohol derivative and the above mentioned optional additives in an 38% by weight solution in ethylacetate and the polyisocyanate (crosslinker), for example, as a 60% solution in ethylacetate, in a weight ratio of 100:10 to 100:35, preferably of 100:20 to 100:30 and most preferably of 100:25.

The resulting lacquer forming mixture having an average solid content of about 40% to 45% can be diluted - dependent on the application process and equipment - by adding further inert solvent such as ethyl acetate.

Said perfume barrier layer can be applied either on one of the two sides of the layer of polyolefine-based material or on both. Preferably said barrier layer is applied on the side being printed, thus on the side which will form the outside of a package made of the multilayer material of the present invention.

The multilayer material of the present invention further comprises less than 25% by weight of the total multilayer material of post consumer recycled plastic (PCR), preferably less than 24% and more preferably less than 22%. Said PCR is incorporated in said layer of polyolefine-based material. Said PCR has the advantage to be environmental friendly.

In one embodiment of the present invention said multilayer material comprises a first layer of polyethylene and a perfume barrier layer. Said first layer has a thickness of from 30 to 200 micrometers, preferably of from 40 to 150 micrometers and most preferably of from 50 to 100 micrometers. In said embodiment said first layer of polyethylene is a coextruded film of LDPE/LLDPE/HDPE.

In a preferred embodiment of the present invention said multilayer material comprises a first layer and a second layer of polyethylene and a perfume barrier layer being sandwiched between said first and said second layer. In such a multilayer material the print is optimally protected against rubs and the product contained in a package made of such material. Said first layer of polyethylene on which the advertising messages are printed constitutes the inside layer. Said second layer is translucent and constitutes the outside layer. By "inside layer" it is meant herein the layer which will be on the inside side of a package and by "outside layer" it is consequently meant the layer which will be on the outside side of said package made of a material comprising the multilayer material of the present invention. Preferred as first layer is a coextruded film of LDPE/LLDPE/HDPE having a thickness of from 30 to 200 micrometers, preferably of from 40 to 150 micrometers and more preferably of from 50 to 100 micrometers. Said first layer further comprises an opacifiant such as titanium oxide. Preferred as second layer is a coextruded film of LDPE/LLDPE having a thickness of from 20 to 50 micrometers, preferably of from 25 to 40 micrometers.

All coating methods known and common for any person skilled in the art may be used to attach the different layers of the multilayer material of the present invention. The present invention is applicable to coating methods using adhesives and to any lamination technique such as heat sealing lamination and extrusion lamination without using any adhesive. Preferred herein is to use non-heat-sealing methods with adhesives capable of achieving a sufficient tight attachment of the layers of the multilayer material. The adhesive commonly used are polyurethane type resin adhesives alone or with any solvent well known to those skilled in the art, such as ethylacetate.

The production of the multilayer material of the present invention is done on coating machines. The perfume barrier layer is preferably applied on the printing press, preferably coated or printed, before, during or after the printing process itself. The following printing techniques can be used to apply said perfume barrier layer according to the present invention: flexographic, gravure, frontal, offset, silk screen. Preferred herein a first layer of polyethylene is unwinded and then the perfume barrier layer of the present invention is printed or coated thereto on a first station of a printing press and then inks are applied on top of said barrier layer using other stations of a printing press. In the embodiment wherein said multilayer material comprises a second layer said layer is adhesively laminated on top of the so formed coated/printed first layer and the formed sandwich is cured to ensure complete crosslinking of said perfume barrier layer and said adhesive.

The present invention also encompasses packages made of a material comprising a multilayer material according to the present invention. Preferably said packages are made of a material being in its totality the multilayer material according to the present invention.

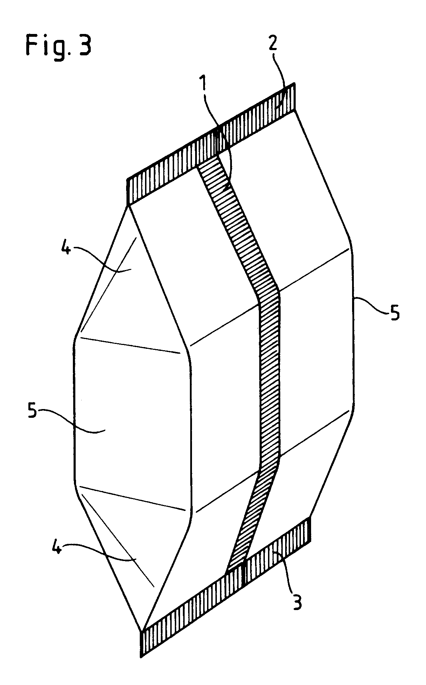

The packages of the present invention may be used as a stand-up refill pouch. This satisfies environmental protection considerations as said pouch can be rolled up after use thereby producing less waste. Such a stand-up refill pouch, as can be seen from figure 3, is formed from a length of generally flat multilayer material according to the present invention, the longitudinal edges of said length being connected together by a longitudinal seal (1), and the opposite ends (2) and (3) of the tube so formed being closed, wherein on one lateral side (5) only a portion of the plastic container adjacent each of the said ends is folded inwardly so as to form a gusset (4). Such a pouch will stand on the gusset when presented on the shelf. The straight top located on the opposite side of the gusset in such a pouch is preferably provided with a printed line to indicate to the consumer how to cut the pouch such as to ease and control pouring to the appropriate refillable package. It is also known to produce such pouches having two gussets located on each of their lateral sidewalls. Such pouches with two gussets respectively located on each of their lateral sidewalls stand on their bottom transverse seals.

The multilayer material of the present invention is a barrier for odoriferous compositions. By "odoriferous compositions" it is to be understood herein compositions comprising any ingredients having an odor including ingredients having a base odor being either pleasant such as perfumes, or unpleasant, such as fertilizers. Said multilayer material of the present invention is suitable to manufacture packages for containing different types of products being either in a dry or in a liquid form such as, but not limited to automatic dishwasher detergents, laundry detergents, softeners and/or hard surface cleaners. More particularly, the package according to the present invention is adequate to contain from conventional unconcentrated detergent products to so called "concentrated" products where the amount of odoriferous ingredients such as perfume is higher as compared to said unconcentrated products, this to obtain the same level of perfume during use, e.g. in a wash solution. Indeed, the package according to the present invention is adequate to contain for example a dry concentrated composition having a bulk density above 600g/l, said compositions containing beaches such as percarbonate, perborate as well as perfumes. The multilayer material of the present invention is also suitable to be used in other fields such as food, beverage, fertilizers and the like.

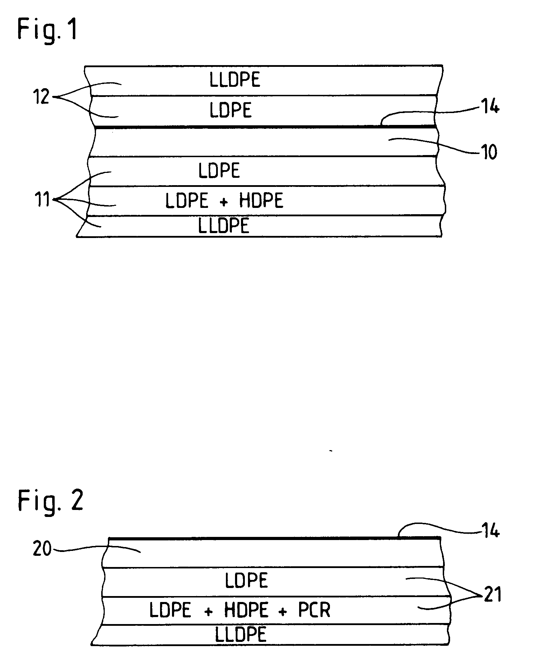

Multilayer material according to the present invention are illustrated in figures 1 and 2 through the transverse structure of said multilayer material.

### Example 1

As can be seen from figure 1, the perfume barrier layer (10) is sandwiched between a first (11) and a second layer (12) of polyolefine-based material. Said first layer is a 75 micrometers coexfilm made out of LDPE, LLDPE and HDPE. Said first layer is a white pigmented film. Said second layer is a 25 micrometers transparent coexfilm made out of LDPE and LLDPE. Said perfume barrier layer is Flexoplastol® 2KB - Lacquer 9A 918 920 with Crosslinker® 9A 919 612 dissolved in ethylacetate in a weight ratio of the lacquer forming component to the crosslinker of from 100:25. The thickness of said barrier layer is 2-3 micrometers.

In this example the perfume barrier layer (10) is coated onto said first film (11) on the first station of a Flexographic printing press, inks (14) are applied on top of said barrier layer using the other stations of the printing press. Said first film has a minimum surface tension of 40 dyn/cm (corona treated film) this to obtain good bonding of the perfume barrier layer and inks to said film. The perfume barrier layer is applied by using a very fine Anylox® roller to have the coating as uniform as possible and the weight in wet stage is 5 - 6 g/sqm which corresponds to +/- 2 g/sqm in dry stage. After drying said second film is adhesively laminated on said coated first film. As adhesive a polyurethane based adhesive is used. The perfume barrier layer and print are in sandwich.

This multilayer material is used to produce gusseted refill pouches for detergent powders comprising odoriferous compounds such as perfume. The perfume release through the walls of such a refill pouch made of the multilayer material according to the present invention is reduced as compared to commercially available pouches made for instance only of polyethylene.

### Example 2

As can be seen from figure 2, the perfume barrier layer (20) is applied onto a layer (21) of a polyolefine-based material. Said layer is a 70 micrometers coexfilm made of LDPE, LLDPE, HDPE and further contains 24 % of PCR. The perfume barrier layer is Flexoplastol® 2KB - Lacquer 9A 919 817 with Crosslinker® 9A 919 612 dissolved in ethylacetate in a weight ratio of the lacquer forming component to the crosslinker of from 100:25. The thickness of said barrier layer is 2-3 micrometers

The perfume barrier layer (20) is applied on said film (21) on the first station or on the last station of a frontal printing press, inks (14) are also applied using the other stations of the printing press. Said film has a minimum surface tension of 40 dyn/cm (corona treated film) this to obtain good bonding of the barrier layer and inks to said film. The perfume barrier layer is applied by using a very fine Anylox® roller to have the coating as uniform as possible and the weight in wet stage is 5 - 6 g/sqm which corresponds to +/- 2 g/sqm in dry stage. The perfume barrier layer and print constitute the outside side of said film and will be located on the outside side of a package made of such a material.

This multilayer material is used to produce gusseted refill pouches for detergent powders. The odor release through the walls of said refill pouch made of the multilayer material according to the present invention is reduced as compared to commercially available pouches made for instance only of polyethylene.

## Claims

1. A multilayer material comprising at least a layer of polyolefine-based material and a perfume barrier layer, characterized in that said perfume barrier layer comprises a lacquer forming mixture and that said polyolefine-based material comprises less than 25% by weight of the total multilayer material of post consumer recycled plastic.

2. A multilayer material according to claim 1 wherein said material comprises a first layer of polyolefine-based material and wherein said polyolefine-based material is polyethylene.

3. A multilayer material according to claim 2 wherein said polyethylene is a blended or coextruded film comprising a low density polyethylene, a linear low density polyethylene, a high density polyethylene, or mixtures thereof.

4. A multilayer material according to claim 3 wherein said blended or coextruded film has a thickness of from 30 to 200 micrometers.

5. A multilayer material according to any of the preceding claims wherein said multilayer material further comprises a second layer of polyolefine-based material, preferably polyethylene and more preferably a blended or coextruded film comprising a low density polyethylene, a linear low density polyethylene, a high density polyethylene, or mixtures thereof, said perfume barrier layer being sandwiched between said first and said second layers.

6. A multilayer material according to claim 5 wherein said first layer is a coextruded film comprising low density polyethylene/linear low density polyethylene/high density polyethylene and having a thickness of from 40 to 150 micrometers, preferably of from 50 to 100 micrometers and said second layer is a coextruded film comprising low density polyethylene/linear low density polyethylene and having a thickness of from 20 to 50 micrometers, preferably of from 25 to 40 micrometers.

7. A multilayer material according to any of the preceding claims wherein said perfume barrier layer comprises a lacquer forming mixture, said perfume barrier layer having a thickness of from 1 to 20 micrometers, preferably of from 1.5 to 5 and more preferably of from 2 to 3 micrometers.

8. A multilayer material according to claim 7 wherein said lacquer forming mixture is a two-component polyurethane system based on polyesterpolyols and oligomeric polyisocyanates in combination with cellulose derivatives and/or polyvinylalcohol derivatives.

9. A multilayer material according to claim 7 or 8 wherein said lacquer forming mixture further comprises plasticizers, slip aids and/or ketones resins.

10. A multilayer material according to any of the claims 7 to 9 wherein said lacquer forming mixture is diluted in an inert organic solvent, preferably in an ester.

11. A package made of a material comprising a multilayer material according to any of the preceding claims.

12. A package according to claim 11 wherein said material in its totality is said multilayer material.

13. A package according to claim 11 or 12 wherein said package comprises an odoriferous composition.

14. A package according to claim 13 wherein said composition comprises a perfume, said composition being preferably a dry detergent composition and more preferably a dry concentrated detergent composition.

15. A package according to any of the claims 11 to 14 wherein said package is formed from a length of said material, the longitudinal edges of said length being connected together by a longitudinal seal (1), and the opposite ends (2) and (3) of the tube so formed being also sealed, said pouch on one of its lateral sides (5) only comprises a portion adjacent each of the said ends which is folded inwardly so as to form a gusset (4), on which said pouch stands.
